# EUROPÄISCHE PATENTSCHRIFT

(11) **EP 4 183 527 B1**
(45) Veröffentlichungstag und Bekanntmachung des Hinweises auf die Patenterteilung: **05.06.2024**
(21) Anmeldenummer: 21210019.2
(22) Anmeldetag: 23.11.2021
(51) Int. Cl.: B25H 3/00

(54) **WERKERGEGENSTANDSAUFBEWAHRUNGSVORRICHTUNG, VERFAHREN ZUR BEURTEILUNG DES BELADUNGSZUSTANDS EINER AUFNAHMEVORRICHTUNG UND VERFAHREN ZUM ERSTELLEN EINES MACHINE LEARNING MODELLS**
WORKPIECE-GOODS STORAGE DEVICE, METHOD FOR ASSESSING THE LOADING STATE OF A RECEIVING DEVICE AND METHOD FOR PRODUCING A MACHINE LEARNING MODEL
DISPOSITIF DE STOCKAGE DES OBJETS DE TRAVAIL, PROCÉDÉ D'ÉVALUATION DE L'ÉTAT DE CHARGEMENT D'UN DISPOSITIF DE RÉCEPTION, ET PROCÉDÉ DE CRÉATION D'UN MODÈLE D'APPRENTISSAGE AUTOMATIQUE

(43) Veröffentlichungstag der Anmeldung: 24.05.2023
(73) Patentinhaber: Hoffmann Engineering Services GmbH, 81241 München (DE)
(72) Erfinder: SCHLENKER, Hans, 81539 München (DE); Ritavan, 80634 München (DE); SCHINDLER, Katrin, 80798 München (DE); MÜLTNER, Thomas, 86163 Augsburg (DE)
(74) Vertreter: Seemann & Partner Patentanwälte mbB

(56) Entgegenhaltungen:
- EP-A1- 2 014 424
- US-A1- 2013 232 039
- US-A1- 2020 027 026
- US-A1- 2020 407 162

## Beschreibung

Die Erfindung betrifft eine Werkergegenstandsaufbewahrungsvorrichtung umfassend wenigstens einen Sensor, eine Steuervorrichtung, eine Ausgabevorrichtung und eine Aufnahmevorrichtung mit Aufnahmen für Werkergegenstände, wobei die Aufnahmen an die Form der Werkergegenstände individuell angepasst sind. Zudem betrifft die Erfindung ein Verfahren zur Beurteilung des Beladungszustands einer Aufnahmevorrichtung und ein Verfahren zum Erstellen eines Machine Learning Modells.

Aus der GB 2 406 092 B ist ein Warenwirtschaftssystem bekannt, mittels dessen die Entnahme und der Ersatz von Werkergegenständen in einem Container überwacht wird. Derartige Warenwirtschaftssysteme können hilfreich sein, um festzustellen, ob Werkergegenstände nach der Benutzung wieder an ihren Platz zurückgelegt worden sind oder ob diese verlorengegangen sind oder gestohlen wurden. Beispielsweise ist dies sehr wichtig, wenn Luftfahrzeuge repariert werden, da für den Fall, dass ein Werkergegenstand innerhalb einer Turbine des Luftfahrzeugs zurückgelassen wird, schwerwiegende Folgen drohen.

Um zu verhindern, dass Werkergegenstände in den Behältern nicht zurückgelegt werden und um dieses überwachen zu können, werden üblicherweise Schaumstoffeinlagen verwendet, in denen Aussparungen vorgesehen sind, die mit der Form und Größe des Werkergegenstands übereinstimmen. Eine Bedienperson kann so ganz einfach feststellen, ob alle Werkergegenstände in den dafür vorgesehenen Aufnahmen aufgenommen sind. Dies ist allerdings zeitaufwendig. Zudem kann dieses für einige Anwendungen auch nicht sicher genug sein, da möglicherweise ähnliche Werkergegenstände in Aufnahmen eingebracht werden, die mit den eigentlich dafür vorgesehenen Werkergegenständen verwechselt werden können.

Unter einem Werkergegenstand wird insbesondere ein Werkzeug sowie beispielsweise Montagematerial und Kleinzeug, wie beispielsweise Schrauben, Nägel, Bolzen, Widerstände, Kabel, Stecker, Steckerbuchsen und Ähnliches, verstanden. Außerdem wird unter Werkergegenständen auch persönliche Schutzausrüstung, wie beispielsweise eine Schutzbrille, Schutzhandschuhe, Gehörschutz, Helme und Ähnliches, verstanden. Unter Montagematerial können auch Boxen oder Behälter für Montagematerial verstanden werden, beispielsweise Behälter für Fräser oder Bohrer oder Behälter für Schrauben. Insbesondere wird unter Werkergegenständen Werkzeug verstanden, wie Schraubendreher, Hämmer, Drehmomentschlüssel, Ackuschrauber und Ähnliches oder Zubehör wie zum Beispiel (austauschbare) Messköpfe, Knarren, Bits und Ähnliches oder Ersatzteile, Adapter, Halter oder Fräser, Bohrer, Schneidköpfe etc.

Aus US 2020/0407162 A1 ist ein automatisches Werkzeugkontrollsystem gemäß dem Oberbegriff des Anspruchs 1 und ein Verfahren gemäß dem Oberbegriff des Anspruchs 10 bekannt, mit dem sich die Position und der Zustand der Werkzeuge in dem System überwachen lassen. Hierzu umfasst das System Sensoren, beispielsweise Kameras, RFID-Sensoren, Bluetooth-Sensoren, Kontaktsensoren, kapazitive Sensoren, induktive Sensoren oder Gewichtssensoren. Ein Verfahren zum Erstellen eines Machine Learning Modells wobei eine Anzahl verschiedener Trainingsdatensätze erstellt wird, wobei jeder Trainingsdatensatz Sensordaten enthält, die mittels wenigstens eines Sensors erfasst wurden, wobei die Sensordaten dem Machine Learning Modell als Eingangswerte für ein Training des Machine Learning Modells zugeführt werden ist aus der US 2020/027026 A1 bekannt.

Jedoch ist die Beurteilung des Beladungszustands einer Aufnahmevorrichtung mittels Sensoren nicht ganz einfach, gerade beim Einsatz kapazitiver oder induktiver Sensoren, da die von den Sensoren ausgegebenen Sensordaten von physikalischen Veränderungen in ihrer Umgebung abhängen. Eine fehlerhafte Auswertung der Sensorsignale kann daher zu einer unzutreffenden Beurteilung des Beladungszustands führen.

Es ist die Aufgabe der vorliegenden Erfindung, die Zuverlässigkeit der Erkennung der Präsenz und/oder Lage eines Werkergegenstands in einer Aufnahme einer Aufnahmevorrichtung zu verbessern.

Gelöst wird diese Aufgabe durch eine Werkergegenstandsaufbewahrungsvorrichtung umfassend wenigstens einen Sensor, eine Steuervorrichtung und eine Aufnahmevorrichtung mit Aufnahmen für Werkergegenstände, wobei die Aufnahmen an die Form der Werkergegenstände individuell angepasst sind, wobei der wenigstens eine Sensor dazu eingerichtet ist, Sensordaten zu erfassen, mittels denen die Präsenz und/oder Lage der Werkergegenstände in den Aufnahmen ermittelbar ist, und die Sensordaten an die Steuervorrichtung zu übermitteln, wobei die Steuervorrichtung dazu eingerichtet ist, die Sensordaten des Sensors zu empfangen und als Eingabewerte wenigstens einem Machine Learning Modell zuzuführen, wobei das Machine Learning Modell darauf trainiert ist, aus den Eingabewerten wenigstens einen binären Ausgabewert zu berechnen, wobei der binäre Ausgabewert angibt, ob eine Aussage über einen Beladungszustand der Aufnahmevorrichtung zutreffend ist, wobei die Steuervorrichtung dazu eingerichtet ist, ein den binären Ausgabewert umfassendes Signal zu erzeugen.

Vorteilhaft kann durch die erfindungsgemäße Werkergegenstandsaufbewahrungsvorrichtung eine zuverlässige Aussage über den Beladungszustand der Aufnahmevorrichtung getroffen werden. Der Beladungszustand der Aufnahmevorrichtung gibt insbesondere an, ob und wie die Aufnahmen mit Werkergegenständen gefüllt sind. Indem die Sensordaten des wenigstens einen Sensors einem speziell dafür trainierten Machine Learning Modell zugeführt werden, werden bei der Auswertung der Sensordaten die physikalischen Veränderungen in der Umgebung des wenigstens einen Sensors berücksichtigt.

Insbesondere umfasst die Werkergegenstandsaufbewahrungsvorrichtung mehrere Sensoren, die in einem Sensorraster angeordnet sind. Insbesondere sind die Aufnahmen derart in der Nähe der Sensoren angeordnet, dass die Sensordaten eines einzelnen Sensors durch das Vorhandensein oder Fehlen mehrerer Werkergegenstände beeinflusst werden und/oder die Sensordaten mehrerer Sensoren durch das Vorhandensein oder Fehlen eines einzelnen Werkergegenstands beeinflusst werden. In diesem Fall ist also nicht jedem Werkergegenstand genau ein einzelner Sensor zugeordnet. Gerade in diesem Fall ist ein Machine Learning Modell zur Auswertung der Sensordaten sehr vorteilhaft, da nicht mehr über die Auswertung eines einzelnen Sensorsignals auf das Vorhandensein des zugeordneten Werkergegenstands geschlossen werden kann.

Ein Machine Learning Modell, auch als Modell für maschinelles Lernen bezeichnet, ist ein Vorhersage- oder Entscheidungsmodell, das durch einen Machine Learning Algorithmus durch Training an Trainingsdaten erstellt wurde. Gemäß einer Ausführungsform ist das Machine Learning Modell auf einem Datenspeicher der Steuervorrichtung gespeichert. Gemäß einer alternativen Ausführungsform ist das Machine Learning Modell extern, insbesondere in einer Cloud-Ressource, gespeichert. Zum Ausführen des Machine Learning Modells greift die Steuervorrichtung insbesondere auf die Cloud-Ressource zu.

Das Machine Learning Modell gibt einen oder mehrere binäre Ausgabewerte aus. Ein binärer Ausgabewert ist ein einzelner binärer Wert, der "0" oder "1" ist. Ist der binäre Ausgabewert "1", heißt das, dass die Aussage über den Beladungszustand zutreffend ist. Ist der binäre Ausgabewert hingegen "0", trifft die Aussage nicht zu. Der binäre Ausgabewert ist eine Klasse, die den Eingabewerten zugeordnet ist. Es handelt sich bei dem vorliegenden Machine Learning Modell also um ein binäres Klassifikationsmodell. Insbesondere ist das Machine Learning Modell ein Random Forest Modell oder ein Extrem Gradient Boosting Modell oder eine Kombination dieser Modelle. Die Klassifikationsmodelle eignen sich besonders gut für die Klassifikation der Sensordaten.

Die Aufnahmen sind insbesondere in die Aufnahmevorrichtung eingebracht, insbesondere eingefräst oder eingeschnitten. Die Aufnahmevorrichtung ist beispielsweise aus einem Schaumstoff oder einem anderen geeigneten Material hergestellt. Beispielsweise ist die Aufnahmevorrichtung eine Einlage für eine Schublade eines Werkzeugschranks oder eine Einlage für einen Werkzeugkoffer.

Insbesondere umfasst der wenigstens eine Sensor einen elektronischen Näherungssensor, insbesondere einen kapazitiven und/oder einen induktiven Sensor. Elektronische Näherungssensoren erzeugen ein elektrisches bzw. elektromagnetisches Feld in dem Arbeitsbereich, in dem ein Objekt detektiert werden soll. Die Anwesenheit bzw. Art und/oder Lage bzw. Position des Objekts verändert ein definiertes oder vorgebbares elektromagnetisches Feld und kann dadurch vom Sensor detektiert werden. Insbesondere ist der wenigstens eine Sensor im Bereich oder in der Nähe der Aufnahmen angeordnet. Insbesondere ist der wenigstens eine Sensor in einer Sensorvorrichtung angeordnet, die sich insbesondere unterhalb der Aufnahmevorrichtung befindet oder in die Aufnahmevorrichtung integriert ist. Die Sensorvorrichtung umfasst insbesondere eine Vielzahl von Sensoren, beispielsweise kapazitive und/oder induktive Sensoren. Insbesondere sind die Sensoren so im Bereich der Aufnahmen angeordnet, dass die Präsenz und/oder Lage von Werkergegenständen in sämtlichen Aufnahmen der Aufnahmevorrichtung detektierbar ist.

Die Steuervorrichtung ist insbesondere ein Computer, insbesondere ein Ein-Platinen-Computer, beispielsweise ein Raspberry Pi 4. Ein Ein-Platinen-Computer ist vorteilhaft, da er leicht in der Werkergegenstandsaufbewahrungsvorrichtung untergebracht werden kann. Gemäß einer Ausführungsform umfasst die Werkergegenstandsaufbewahrungsvorrichtung eine einzelne Steuervorrichtung und eine Vielzahl von Aufnahmevorrichtungen, die von der Steuervorrichtung überwacht werden.

Vorzugsweise ist die Steuervorrichtung dazu eingerichtet, das Signal an wenigstens eine Schnittstelle der Werkergegenstandsaufbewahrungsvorrichtung zu übermitteln, wobei insbesondere die Werkergegenstandsaufbewahrungsvorrichtung dazu eingerichtet ist, das Signal, insbesondere drahtlos oder drahtgebunden, von der Schnittstelle an eine Ausgabevorrichtung der Werkergegenstandsaufbewahrungsvorrichtung und/oder ein externes Datenverarbeitungssystem zu übermitteln.

Über die Ausgabevorrichtung wird ein Nutzer darüber informiert, ob die Aussage über den Beladungszustand zutreffend ist oder nicht. Die Ausgabevorrichtung ist insbesondere eine optische Ausgabevorrichtung, insbesondere eine LED und/oder ein Bildschirm, und/oder eine akustische Ausgabevorrichtung und/oder eine haptische Ausgabevorrichtung. Auf einem Bildschirm wird beispielsweise eine Statusmeldung über den Beladungszustand basierend auf dem binären Ausgabewert angezeigt. Die Statusmeldung kann auch akustisch ausgebeben werden. Ein haptisches Signal kann beispielsweise ausgegeben werden, wenn wenigstens ein Werkergegenstand fehlt. Das externe Datenverarbeitungssystem umfasst beispielsweise ein zentrales Werkergegenstandsverwaltungssystem eines Betriebs, einen Computer und/oder ein Smartphone. Über das externe Datenverarbeitungssystem wird der Beladungszustand der Aufnahmen dokumentiert und/oder der Nutzer darüber informiert, ob die Aussage über den Beladungszustand zutreffend ist oder nicht.

Die Werkergegenstandsaufbewahrungsvorrichtung ist beispielsweise ein Schrank, ein Koffer, ein Behälter, eine Schachtel, ein Regal, eine Schublade, eine Werkbank, ein (Roll-)Container, ein Montagewagen oder eine ähnliche Vorrichtung, die zur Aufnahme von Werkergegenständen geeignet ist.

Vorzugsweise gibt der binäre Ausgabewert an, ob sämtliche Aufnahmen mit Werkergegenständen gefüllt sind und/oder ob genau eine Aufnahme keinen Werkergegenstand enthält und/oder ob mehr als eine Aufnahme keinen Werkergegenstand enthält.

Durch einen binären Ausgabewert, der angibt, ob sämtliche Aufnahmen mit Werkergegenständen gefüllt sind, kann auf einfache Weise eine Aussage über die vollständige Beladung der Aufnahmevorrichtung getroffen werden. Die drei genannten Aussagen sind exklusiv, das heißt, es muss immer genau ein binärer Ausgabewert, der die Aussagen repräsentiert, den Wert "1" annehmen und die übrigen binären Ausgabewerte den Wert "0" haben. Sofern alle drei binären Ausgabewerte vorliegen, kann auf diese Weise die Zuverlässigkeit der Aussagen überprüft werden. Hat mehr oder weniger als ein binärer Ausgabewert den Wert "1", so wurde wenigstens ein binäre Ausgabewert nicht korrekt ermittelt.

Die Sensordaten werden vorzugsweise mehreren Machine Learning Modellen zugeführt, die binäre Ausgabewerte zu unterschiedlichen Aussagen über den Beladungszustand berechnen.

Durch das Zuführen der Sensordaten zu mehreren Machine Learning Modellen lassen sich verschiedene Aussagen über den Beladungszustand treffen, so dass der genaue Beladungszustand zuverlässiger ermittelbar ist. Beispielsweise werden für alle drei der zuvor genannten Aussagen die Sensordaten jeweils einem Machine Learning Modell zugeführt, die unabhängig voneinander binäre Ausgabewerte zu den zuvor genannten unterschiedlichen Aussagen errechnen.

Vorzugsweise ist die Steuervorrichtung dazu eingerichtet, aus den binären Ausgabewerten, die von den mehreren Machine Learning Modellen berechnet wurden, eine Gesamtaussage über den Beladungszustand zu ermitteln, wobei die Ermittlung der Gesamtaussage durch Verknüpfung der binären Ausgabewerte mittels vorgegebener Verknüpfungsregeln und/oder durch Zuführen der binären Ausgabewerte zu einem weiteren Machine Learning Modell erfolgt.

Eine Gesamtaussage gibt beispielsweise an, welche der Aufnahmen mit welchen Werkergegenständen gefüllt sind. Dazu wird beispielsweise berücksichtigt, welche der Aufnahmen leer sind, welche der Aufnahmen mit den individuell angepassten Werkergegenständen gefüllt sind und welche der Aufnahmen mit anderen Werkergegenständen gefüllt sind. Die Verknüpfungsregeln zur Verknüpfung der binären Ausgabewerte geben insbesondere an, welche binären Ausgabewerte bei einem Widerspruch mit anderen binären Ausgabewerten berücksichtigt und welche unberücksichtigt bleiben sollen.

Insbesondere ermittelt der wenigstens eine Machine Learning Algorithmus für den binären Ausgabewert einen Wahrscheinlichkeitswert, der angibt, mit welcher Wahrscheinlichkeit der angegebene binäre Ausgabewert korrekt ist. Der Wahrscheinlichkeitswert wird insbesondere als Indikator dafür herangezogen, welcher binäre Ausgabewert bei einem Widerspruch zwischen mehreren binären Ausgabewerten primär berücksichtigt wird. Insbesondere wird mittels der Wahrscheinlichkeitswerte der binären Ausgabewerte eine Gesamtwahrscheinlichkeit für die Gesamtaussage ermittelt. Insbesondere werden mehrere Gesamtaussagen ermittelt, wobei diejenige Gesamtaussage als zutreffend angenommen und ausgegeben wird, deren Gesamtwahrscheinlichkeit am größten ist. Insbesondere umfasst das Signal die Gesamtaussage. Auf diese Weise lässt sich die Gesamtaussage über die Ausgabevorrichtung anzeigen und/oder an das externe Datenverarbeitungssystem übermitteln. Insbesondere wird einem Nutzer die Gesamtaussage zusammen mit einem Zuverlässigkeitsindikator ausgegeben. Insbesondere ist der Zuverlässigkeitsindikator die Gesamtwahrscheinlichkeit der Gesamtaussage und/oder eine die Gesamtwahrscheinlichkeit beschreibende Aussage. Beispielsweise ist diese beschreibende Aussage, dass die Gesamtaussage mit hoher Wahrscheinlichkeit richtig ist oder das die Gesamtaussage möglicherweise zutrifft und der Nutzer dies überprüfen sollte.

Alternativ oder zusätzlich werden die binären Ausgabewerte einem weiteren Machine Learning Modell als Eingabewerte zugeführt, das als Ausgabe die Gesamtaussage ausgibt. Hierzu wurde das weitere Machine Learning Modell zuvor mit Trainingsdaten aus unterschiedlichen binären Ausgabewerten, und insbesondere mit Wahrscheinlichkeitswerten für die binären Ausgabewerte, trainiert.

Bevorzugt ist für jede Aufnahme ein zugeordnetes Machine Learning Modell auf der Speichervorrichtung gespeichert, wobei die zugeordneten Machine Learning Modelle darauf trainiert sind, aus den Sensordaten individuelle binäre Ausgabewerte zu berechnen, die jeweils angeben, ob sich der an die zugeordnete Aufnahme individuell angepasste Werkergegenstand in der zugeordneten Aufnahme befindet.

Somit wird für jede Aufnahme ein individueller binärer Ausgabewert erzeugt, der angibt, ob der individuell angepasste Werkergegenstand in der Aufnahme angeordnet ist. Die individuellen binären Ausgabewerte werden insbesondere als Grundlage für Aussagen über den Beladungszustand berücksichtigt, die angeben, dass in einem oder mehreren der Aufnahmen Werkergegenstände fehlen und welche Aufnahmen dies sind. Insbesondere werden die individuellen binären Ausgabewerte zur Ermittlung der Gesamtaussage über den Beladungszustand herangezogen.

Insbesondere wird bei der Entnahme eines Werkergegenstands die Zeit der Entnahme und/oder der entnehmende Nutzer erfasst und gespeichert. Der Nutzer wird insbesondere mittels einem Identifikationskennzeichen, beispielsweise einer Mitarbeiterkarte identifiziert.

Vorzugsweise ist die Steuervorrichtung dazu eingerichtet, aus den individuellen binären Ausgabewerten zu bestimmen, wie viele Aufnahmen keinen Werkergegenstand enthalten und/oder welche Aufnahmen keinen Werkergegenstand enthalten.

Dies gibt dem Nutzer eine genaue Auskunft über den Beladungszustand. Insbesondere wird über die Ausgabevorrichtung angezeigt, wie viele und/oder welche Aufnahmen keinen Werkergegenstand enthalten.

Insbesondere wird mittels eines oder mehrerer Machine Learning Modelle ein binärer Ausgabewert ermittelt wird, der angibt, ob wenigstens ein in einer Aufnahme angeordneter Werkergegenstand einem zuvor festgelegten Originalwerkergegenstand entspricht.

Insbesondere wird für wenigstens eine Aufnahme, insbesondere alle Aufnahmen, ein binärer Ausgabewert berechnet, der angibt, ob ein in dieser Aufnahme angeordneter Werkergegenstand einem zuvor festgelegten Originalwerkergegenstand entspricht. Der Originalwerkergegenstand ist derjenige Werkergegenstand, der bei dem Training des oder der Machine Learning Modelle in die zugeordnete Aufnahme eingelegt wurde. Wird ein anderer Werkergegenstand in diese Aufnahme eingelegt, der beispielsweise ähnlich aussieht aber aus einem anderen Material besteht, unterscheiden sich die von den Sensoren erzeugten Sensordaten. Dieser Unterschied in den Sensordaten wird durch das oder die Machine Learning Modelle ausgewertet, um zu ermitteln, dass der eingelegte Werkergegenstand nicht der Originalwerkergegenstand ist.

Insbesondere umfasst die Werkergegenstandsaufbewahrungsvorrichtung einen Öffnungszustandssensor, mittels dem ermittelbar ist, ob die Aufnahmevorrichtung oder ein Behältnis, in dem die Aufnahmevorrichtung angeordnet ist, offen oder geschlossen ist. Insbesondere erfasst der wenigstens eine Sensor nur dann Sensordaten, wenn mittels des Öffnungszustandssensors ermittelt wurde, dass die Aufnahmevorrichtung oder das Behältnis geschlossen ist. Auf diese Weise werden externe Störungen bei der Auswertung des Beladungszustands reduziert.

Gemäß einer Ausführungsform ist die Werkergegenstandsaufbewahrungsvorrichtung dazu eingerichtet, einen Umgebungsbedingungswert zu erfassen und an die Steuervorrichtung zu übermitteln, wobei die Steuervorrichtung dazu eingerichtet ist, den Umgebungsbedingungswert als Eingabewert dem wenigstens einen Machine Learning Modell zuzuführen, wobei das Machine Learning Modell darauf trainiert ist, bei der Ermittlung des wenigstens einen binären Ausgabewerts den Umgebungsbedingungswert zu berücksichtigen.

Der Umgebungsbedingungswert gibt Rückschluss über eine oder mehrere Umgebungsbedingungen. Umgebungsbedingungen sind insbesondere äußere Einflüsse wie die Umgebungstemperatur, die Luftfeuchtigkeit oder der Luftdruck der umgebenden Luft. Derartige Umgebungsbedingungen, gerade die Umgebungstemperatur, können einen erheblichen Einfluss auf die Sensordaten der Sensoren haben. So kann beispielsweise eine Umgebungstemperatur, die sich deutlich von der Umgebungstemperatur währen des Trainingsvorgangs unterscheidet, dazu führen, dass der Beladungszustand der Aufnahmevorrichtung fehlerhaft erkannt wird. Um die Zuverlässigkeit der Ermittlung des Beladungszustands zu erhöhen, wird daher die wenigstens eine Umgebungsbedingung bei der Ermittlung des Beladungszustands berücksichtigt, indem der Umgebungsbedingungswert dem wenigstens einen Machine Learning Modell als zusätzlicher Eingangswert zugeführt wird. Das wenigstens eine Machine Learning Modell wurde insbesondere zuvor für unterschiedliche Umgebungsbedingungswerte der zu berücksichtigenden Umgebungsbedingungen trainiert, so dass es den Einfluss der Umgebungsbedingungen auf den Ausgabewert berücksichtigt und sich die Zuverlässigkeit bei der Ausgabe erhöht.

Der Umgebungsbedingungswert wird insbesondere durch einen Sensor ermittelt. Insbesondere wird der Umgebungsbedingungswert durch einen der wenigstens einen Sensoren ermittelt, der als Referenzsensor dient. Der Umgebungsbedingungswert ist insbesondere ein Sensorwert des Referenzsensors. Beispielsweise kann der Referenzsensor ein kapazitiver oder induktiver Sensor sein, der baugleich mit zumindest einigen der anderen Sensoren ist. Insbesondere ist der Referenzsensor ein Sensor, dessen Sensordaten durch seine Positionierung nicht oder nur geringfügig durch das Einlegen der Werkergegenstände beeinflusst wird. Durch den Referenzsensor lassen sich die Einflüsse der Umgebungsbedingungen auf die übrigen, baugleichen Sensoren berücksichtigen und/oder herausrechnen. Der konkrete Einfluss einzelner Umgebungsbedingungen auf den Referenzsensor muss dabei nicht bekannt sein. Entscheidend ist lediglich, dass die anderen Sensoren von den Umgebungsbedingungen genauso beeinflusst werden wie der Referenzsensor.

Alternativ ist der zur Ermittlung des Umgebungsbedingungswerts genutzte Sensor ein Sensor, der speziell zur Messung der Umgebungsbedingung ausgelegt ist, beispielsweise ein Temperatursensor, ein Feuchtigkeitssensor oder ein Luftdrucksensor.

Gemäß einer weiteren Ausführungsform ist die Werkergegenstandsaufbewahrungsvorrichtung dazu eingerichtet, einen Umgebungsbedingungswert, insbesondere eine Umgebungstemperatur oder einen Messwert eines Referenzsensors, zu erfassen und an die Steuervorrichtung zu übermitteln, wobei die Steuervorrichtung dazu eingerichtet ist, mittels eines mathematischen Modells den Einfluss der Umgebungsbedingung auf die Sensorwerte zu beurteilen und die Sensorwerte anhand des Umgebungsbedingungswerts zu normieren, bevor die Sensorwerte dem wenigstens einen Machine Learning Modell zugeführt werden.

Gemäß dieser Ausführungsform wird demnach zunächst ein mathematisches Modell erstellt, das die Abhängigkeit der Sensorwerte des wenigstens einen Sensors von der oder den Umgebungsbedingungen beschreibt. Durch Messung eines aktuellen Umgebungsbedingungswerts ist es sodann möglich, den Einfluss der Umgebungsbedingung auf die Sensordaten mittels des mathematischen Modells herauszurechnen, bevor die Sensordaten dem oder den Machine Learning Modellen zugeführt werden. Auf diese Weise wird vermieden, dass der Beladungszustand der Aufnahmevorrichtung durch sich ändernde Umgebungsbedingungen fehlerhaft ermittelt wird.

Die Aufgabe wird zudem gelöst durch ein Verfahren zur Beurteilung des Beladungszustands einer Aufnahmevorrichtung mit Aufnahmen für Werkergegenstände, wobei die Aufnahmen an die Form der Werkergegenstände individuell angepasst sind, wobei wenigstens ein Sensor Sensordaten erfasst, mittels denen die Präsenz und/oder Lage der Werkergegenstände in den Aufnahmen ermittelbar ist, und die Sensordaten an eine Steuervorrichtung übermittelt, wobei die Steuervorrichtung die Sensordaten des Sensors empfängt und als Eingabewerte wenigstens einem Machine Learning Modell zuführt, wobei das Machine Learning Modell aus den Eingabewerten wenigstens einen binären Ausgabewert berechnet, wobei der binäre Ausgabewert angibt, ob eine Aussage über einen Beladungszustand der Aufnahmen zutreffend ist, wobei die Steuervorrichtung ein den binären Ausgabewert umfassendes Signal erzeugt.

Das Verfahren zur Beurteilung des Beladungszustands einer Aufnahmevorrichtung mit Aufnahmen für Werkergegenstände verkörpert die gleichen Vorteile, Merkmale und Eigenschaften wie die zuvor beschriebene Werkergegenstandsaufbewahrungsvorrichtung.

Zudem wird die Aufgabe gelöst durch ein Verfahren zum Erstellen eines Machine Learning Modells zur Beurteilung des Beladungszustands einer Aufnahmevorrichtung mit individuell an die Form von Werkergegenständen angepassten Aufnahmen, wobei eine Anzahl verschiedener Trainingsdatensätze erstellt wird, wobei jeder Trainingsdatensatz Sensordaten enthält, die mittels wenigstens eines Sensors bei festgelegten Beladungszuständen erfasst wurden, wobei sich die Beladungszustände, bei denen die einzelnen Trainingsdatensätze aufgenommen wurden, voneinander unterscheiden, wobei die Sensordaten dem Machine Learning Modell als Eingangswerte für ein Training des Machine Learning Modells zugeführt werden, wobei dem Machine Learning Modell zum Training für jeden der verschiedenen Beladungszustände wenigstens ein binärer Ausgabewert vorgegeben wird, wobei der binäre Ausgabewert angibt, ob eine Aussage über den Beladungszustand zutreffend ist.

Das Verfahren zum Erstellen eines Machine Learning Modells verkörpert die gleichen Vorteile, Merkmale und Eigenschaften wie die zuvor beschriebene Werkergegenstandsaufbewahrungsvorrichtung und des zuvor beschriebenen Verfahrens zur Beurteilung des Beladungszustands einer Aufnahmevorrichtung mit Aufnahmen für Werkergegenstände.

Durch das Verfahren zum Erstellen eines Machine Learning Modells wird effektiv ein zuverlässig arbeitendes Machine Learning Modell trainiert, das den Beladungszustand der Aufnahmevorrichtung beurteilen kann. Hierzu werden die Sensordaten bei unterschiedlichen Beladungszuständen ausgelesen und jeweils als Trainingsdatensätze dem Machine Learning Modell zugeführt. Zum Erstellen der Trainingsdatensätze werden die Sensordaten aller Sensoren aufgenommen und zusammen mit einer Statusinformation über den aktuellen Beladungszustand gespeichert. Die Aufnahme der Sensordaten erfolgt insbesondere zehn Sekunden bis zehn Minuten lang, insbesondere eine Minute lang. Der Abstand zwischen dem Erfassen der einzelnen Messwerte einer Aufnahme ist insbesondere 0,1 bis 10 Sekunden, insbesondere 1 Sekunde. Mittels dieser Trainingsdatensätze lässt sich das Machine Learning Modell effektiv trainieren, um später im Einsatz den Beladungszustand mit großer Zuverlässigkeit zu erkennen.

Vorzugsweise umfassen die verschiedenen Beladungszustände einen Beladungszustand mit vollständig gefüllter Aufnahmevorrichtung und für jede Aufnahme einen Beladungszustand, bei dem ausschließlich diese Aufnahme leer ist, wobei insbesondere die Anzahl von Trainingsdatensätzen wenigstens der doppelten Anzahl an Aufnahmen in der Aufnahmevorrichtung entspricht.

Die Trainingsdatensätze enthalten somit einen Beladungszustand mit vollständig gefüllter Aufnahmevorrichtung und für jede Aufnahme in der Aufnahmevorrichtung einen Beladungszustand, bei der diese Aufnahme nicht gefüllt, die übrigen Aufnahmen hingegen gefüllt sind. Um zu einer Anzahl von Trainingsdatensätzen zu gelangen, die wenigstens der doppelten Anzahl an Aufnahmen in der Aufnahmevorrichtung entspricht, werden insbesondere für die übrigen Trainingsdatensätze Beladungszustände mit zufälliger Beladung gewählt. Beispielsweise wird für eine zufällige Beladung für jede Aufnahme zufällig ausgewählt, ob diese Aufnahme gefüllt oder leer ist.

Gemäß einer Ausführungsform werden für wenigstens einen Beladungszustand, insbesondere mehrere Beladungszustände, Trainingsdatensätze bei unterschiedlichen Umgebungsbedingungen, insbesondere Umgebungstemperaturen, erfasst und ein Umgebungsbedingungswert der Umgebungsbedingung dem Machine Learning Modell im Training als Eingabewert vorgegeben, um die Abhängigkeit der Sensordaten von den Umgebungstemperaturen im Machine Learning Modell zu berücksichtigen.

Durch das Erstellen von Trainingsdatensätzen bei unterschiedlichen Umgebungsbedingungen lässt sich der Einfluss der Umgebungsbedingungen auf die Sensordaten ermitteln und durch Messung der Umgebungsbedingung während der späteren Anwendung des Machine Learning Modells kompensieren. Der Umgebungsbedingungswert, der während des Erstellens der jeweiligen Trainingsdatensätze gemessen wird, wird dem oder den Machine Learning Modellen während des Trainings zugeführt. Auf diese Weise kann beispielsweise der Einfluss der Umgebungstemperatur, der Feuchtigkeit oder des Luftdrucks auf die Sensordaten herausgerechnet und/oder berücksichtigt werden.

Gemäß einer weiteren Ausführungsform wird die Abhängigkeit der Sensordaten von wenigstens einer Umgebungsbedingung, insbesondere der Umgebungstemperatur, durch ein mathematisches Modell beschrieben, wobei das mathematische Modell durch Erfassen von Sensordaten bei unterschiedlichen Umgebungsbedingungen, und insbesondere auch für verschiedene Beladungszustände, und Analyse der erfassten Sensordaten in Abhängigkeit der Umgebungsbedingung ermittelt wird, wobei insbesondere die Sensordaten mittels des mathematischen Modells normiert werden, bevor sie dem Machine Learning Modell als Eingangswerte für ein Training des Machine Learning Modells zugeführt werden.

Gemäß dieser Variante wird also zunächst ein mathematisches Modell ermittelt, das die Abhängigkeit der Sensordaten von der oder den Umgebungsbedingungen beschreibt. Dieses mathematische Modell wird genutzt, um die Sensordaten zu normieren, bevor sie dem oder den Machine Learning Modellen zum Training zugeführt werden.

Insbesondere werden zum Training des Machine Learning Modells jeweils einige der Trainingsdatensätze als Validierungsdaten und die übrigen Trainingsdatensätze als Trainingsdaten verwendet. Auf diese Weise wird das Machine Learning Modell immer mit Daten trainiert, die nicht zum Validierungsdatensatz gehören und wird validiert auf bis dahin unbekannten Daten. Dadurch wird sichergestellt, dass die Trainings- und Validierungskonfigurationen ungleich sind und ein Overfitting vermieden wird.

Gemäß einer Ausführungsform wird die Temperatur von in die Aufnahmen eingelegten Werkergegenständen berücksichtigt, indem das Machine Learning Modell mit Beladungszuständen trainiert wird, bei denen jeweils einzelne Werkergegenstände eine von der Umgebungstemperatur abweichende Temperatur aufweisen oder indem die Gegenstandstemperatur der Werkergegenstände mittels lokaler Sensoren gemessen und die Auswirkung der Gegenstandstemperatur auf die dem Machine Learning Modell zugeführten Sensorwerte mittels eines mathematischen Modells berücksichtigt wird.

Auf diese Weise werden Fehler bei der Bestimmung des Beladungszustands vermieden, die dadurch entstehen, dass ein aufgeheizter oder abgekühlter Werkergegenstand in die Aufnahmevorrichtung eingebracht wird. Da elektronische Näherungssensoren temperaturempfindlich sind, würde ein solcher Werkergegenstand mit abweichender Temperatur zu einer fehlerhaften Auswertung des Beladungszustands führen. Durch Berücksichtigung der abweichenden Temperatur kann dieser Fehler behoben werden.

Insbesondere wird beim Training des Machine Learning Modells ein stochastisches Rauschen berücksichtigt, indem zusätzlich Sensordaten mit synthetischen Fehlern als Eingabewerte dem Machine Learning Modell während des Trainings zugeführt werden. Alternativ wird ein auf den Sensordaten vorhandenes Rauschen analysiert und als Grundlage für ein mathematisches Rauschmodell verwendet, wobei das mathematische Rauschmodell Schwankungen unterworfen und auf die Eingabewerte angewendet wird. Auf diese Weise wird das Machine Learning Modell deutlich robuster gegenüber stochastischen Veränderungen in der Umwelt.

Vorzugsweise werden während des Betriebs der Aufnahmevorrichtung aufgenommene Sensordaten genutzt, um das Machine Learning Modell nachzutrainieren.

Mit anderen Worten wird das Machine Learning Modell nicht nur einmal trainiert, bevor es zur Beurteilung des Beladungszustands einer Aufnahmevorrichtung eingesetzt wird, sondern es werden auch die während der Beurteilung des Beladungszustands aufgenommenen Sensordaten zum Nachtrainieren benutzt. Das Nachtrainieren passiert in diesem Fall insbesondere nicht bei dem Hersteller der Werkergegenstandsaufbewahrungsvorrichtung, sondern automatisiert bei dem Nutzer. Nachtrainiert wird also in der speziellen Umgebung des Nutzers über die Lebenszeit der Werkergegenstandsaufbewahrungsvorrichtung, unter Umständen über Jahre hinweg. Insbesondere werden als sicher erkannte Daten zum Nachtrainieren verwendet. Als sicher erkannte Daten sind insbesondere diejenigen binären Ausgabewerte mit hohen Wahrscheinlichkeitswerten. Auf diese Weise kann beispielsweise eine Sensoralterung berücksichtigt werden und die Datenvielfalt wird deutlich vergrößert. Somit wird die Werkergegenstandsaufbewahrungsvorrichtung über ihre Lebenszeit den örtlichen Gegebenheiten nachgeführt und angepasst.

Das Bereitstellen einer Werkergegenstandsaufbewahrungsvorrichtung umfasst insbesondere folgende Schritte:
Zunächst wird die Werkergegenstandsaufbewahrungsvorrichtung hergestellt. Es wird hierfür eine Aufnahmevorrichtung mit Aufnahmen gefertigt, die individuell an vorgegebene Werkergegenstände angepasst sind. Der oder die Sensoren werden in der Nähe der Aufnahmen angebracht. Zudem wird eine Steuervorrichtung und eine Ausgabevorrichtung bereitgestellt. Anschließend werden Trainingsdatensätze aufgenommen, indem die Sensordaten bei verschiedenen Beladungszuständen der Aufnahmevorrichtung ausgelesen und gespeichert werden. Mit diesen Trainingsdatensätzen wird ein oder mehrere Machine Learning Modelle trainiert. Das Training findet insbesondere auf einem von der Steuervorrichtung separaten Computersystem statt. Dieses separate Computersystem ist beispielsweise eine Cloud-Ressource, die über deutlich mehr Rechenleistung verfügt als die Steuervorrichtung. Nachdem das oder die Machine Learning Modelle trainiert wurden, werden sie auf den Datenspeicher der Steuervorrichtung überspielt. Nun kann die Beurteilung des Beladungszustands mittels des Machine Learning Modells auf der Steuervorrichtung erfolgen. Alternativ kann das Training auch auf der Steuervorrichtung selbst stattfinden. Ebenso kann die Beurteilung des Beladungszustands auch über die Cloud-Ressource erfolgen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische, perspektivische Darstellung einer Werkergegenstandsaufbewahrungsvorrichtung,
- Fig. 2: eine schematisch vereinfachte Draufsicht auf eine Werkergegenstandsaufbewahrungsvorrichtung mit einer Aufnahmevorrichtung,
- Fig. 3: eine schematisch vereinfachte Darstellung einer Aufnahmevorrichtung für Werkergegenstände mit mehreren Sensoren,
- Fig. 4: eine schematische Schnittdarstellung durch ein Behältnis einer Werkergegenstandsaufbewahrungsvorrichtung,
- Fig. 5: eine schematisch vereinfachte Darstellung von Machine Learning Modellen zum Beurteilen des Beladungszustands von Aufnahmevorrichtungen und
- Fig. 6: eine schematisch vereinfachte Darstellung einer Aufnahmevorrichtung mit verschiedenen Beladungszuständen.

In den Zeichnungen sind jeweils gleiche oder gleichartige Elemente und/oder Teile mit denselben Bezugsziffern versehen, so dass von einer erneuten Vorstellung jeweils abgesehen wird.

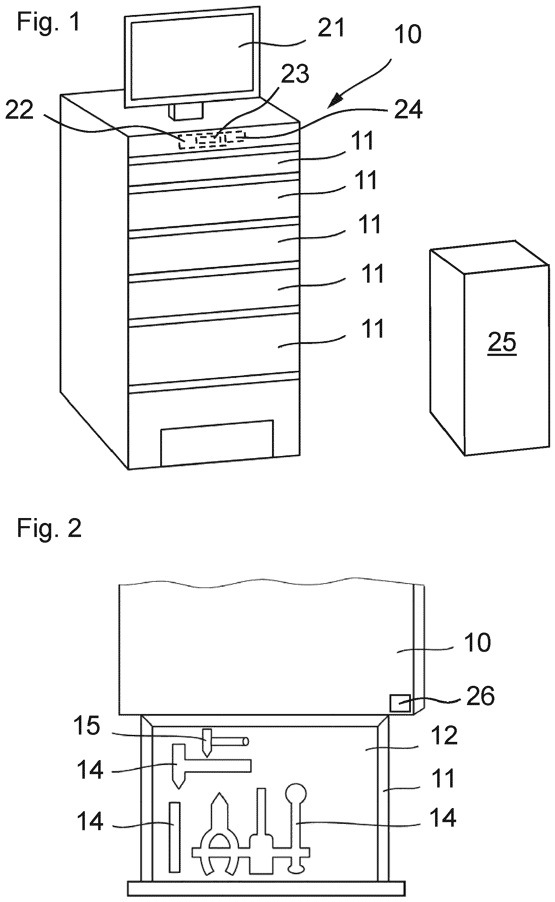

Fig. 1 zeigt schematisch vereinfacht eine dreidimensionale, perspektivische Darstellung einer Werkergegenstandsaufbewahrungsvorrichtung 10. Die Werkergegenstandsaufbewahrungsvorrichtung 10 weist fünf als Schubladen ausgebildete Behältnisse 11 auf, die aus der Werkergegenstandsaufbewahrungsvorrichtung 10 herausgezogen werden können. Es ist zudem eine Ausgabevorrichtung 21 in Form eines Bildschirms dargestellt, in dem bildlich die Präsenz und/oder Lage von Werkergegenständen in einer Aufnahmevorrichtung angezeigt werden können. Die Werkergegenstandsaufbewahrungsvorrichtung 10 umfasst zudem eine mit gestrichelten Linien dargestellte Steuervorrichtung 22 mit einem Datenspeicher 23. Eine Schnittstelle 24 übermittelt Daten und Signale von der Steuervorrichtung 22 an die Ausgabevorrichtung 21 und/oder ein externes Datenverarbeitungssystem 25. Die gestrichelten Linien deuten an, dass die Steuervorrichtung 22, der Datenspeicher 23 und die Schnittstelle 24 sich im Inneren der Werkergegenstandsaufbewahrungsvorrichtung 10 befinden und normalerweise von außen nicht sichtbar wären.

In Fig. 2 ist schematisch eine Draufsicht auf eine Werkergegenstandsaufbewahrungsvorrichtung 10 gezeigt, bei der ein Behältnis 11 in Form einer Schublade aufgezogen wurde. In dem Behältnis 11 ist eine Aufnahmevorrichtung 12 eingebracht, die beispielsweise aus Hartschaum hergestellt ist. Die Aufnahmevorrichtung 12 weist als Aussparungen ausgebildete Aufnahmen 14 auf, in die Werkergegenstände 15 eingebracht werden können. Die Aufnahmen 14 sind individuell an die Form von Werkergegenständen 15 angepasst. Es ist zudem ein Werkergegenstand 15, beispielsweise ein Hammer, in Fig. 2 auf die Aufnahmevorrichtung 12 gelegt, und nicht in eine dafür vorgesehene Aufnahme 14. Wie in Fig. 2 zudem erkennbar ist, ist der Werkergegenstand 15 kleiner als die darunter dargestellte Aufnahme 14, so dass diese Aufnahme 14 nicht die individuell an diesen Werkergegenstand 15 angepasste Aufnahme 14 ist. Mittels eines Öffnungszustandssensor 26 lässt sich ermitteln, ob die Aufnahmevorrichtung 12 bzw. das Behältnis 11 geöffnet oder geschlossen ist.

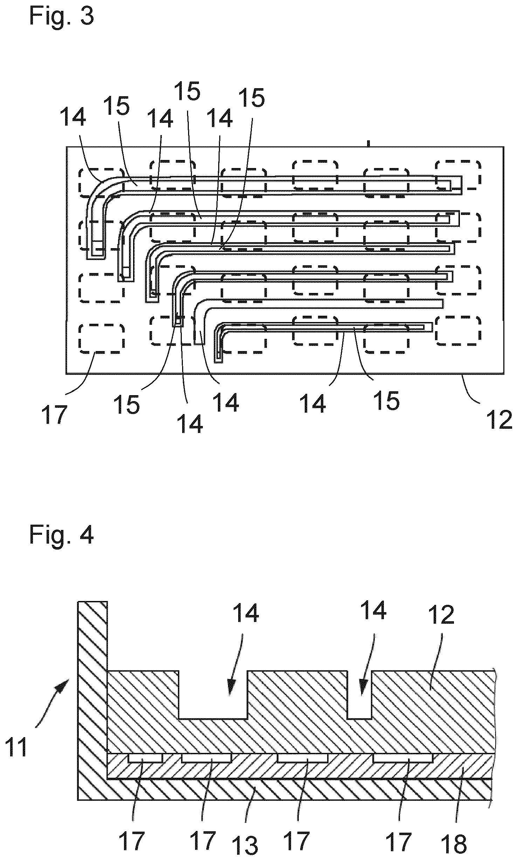

Fig. 3 zeigt eine Draufsicht auf eine weitere Aufnahmevorrichtung 12. Diese Aufnahmevorrichtung 12 weist sechs Aufnahmen 14 auf, die zur Aufnahme von Innensechskantschlüsseln ausgebildet sind. Während in fünf der Aufnahmen 14 tatsächlich Werkergegenstände 15 in Form der Innensechskantschlüssel angeordnet sind, fehlt in einer der Aufnahmen 14 der Werkergegenstand 15. Unterhalb der Aufnahmevorrichtung 12 sind eine Reihe Sensoren 17 angeordnet, die in Fig. 3 durch gestrichelte Linien dargestellt sind. Der Übersicht halber ist lediglich einer der Sensoren 17 mit einem Bezugszeichen versehen. Bei den Sensoren 17 handelt es sich beispielsweise um induktive Sensoren und/oder kapazitive Sensoren, mittels denen die Beladung der Aufnahmevorrichtung 12 mit den Werkergegenständen 15 feststellbar ist. Dazu sind die Sensoren 17 beispielsweise in einer Matrix unterhalb der Aufnahmevorrichtung 12 angeordnet.

Fig. 4 zeigt schematisch eine Schnittdarstellung eines Teils eines Behältnisses 11. Beispielsweise handelt es sich um eine Metallschublade mit einem metallischen Boden 13. Auf dem metallischen Boden 13 ist eine Sensorvorrichtung 18 angeordnet, in der eine Reihe Sensoren 17 eingebracht sind. Bei der Sensorvorrichtung 18 kann es sich beispielsweise um induktive Sensoren und/oder kapazitive Abstandssensoren und/oder kapazitive Näherungsschalter handeln. Ein Abstand zwischen dem leitfähigen Boden 13 und den dazu parallel angeordneten Sensoren 17 kann durch eine Schaumstoffplatte bzw. Vorrichtung aus Schaum oder Kunststoff sichergestellt oder ermöglicht werden.

Die Funktion des Näherungsschalters beruht hierbei auf der Änderung des elektrischen und/oder elektromagnetischen Felds in der Umgebung der Sensorelektrode. Der Sensor 17 arbeitet hierbei beispielsweise mit einer RC-Oszillatorschaltung. Es wird beispielsweise die Kapazität zwischen der aktiven Elektrode und dem elektrischen Erdpotenzial gemessen. Es kann auch die Kapazität zwischen zwei Elektroden, die auf der Sensorvorrichtung 18 aufgebracht sind, gemessen werden. Durch Annäherung eines Stoffes oder Materials an die aktive Zone des Sensors 17 verändert sich die Kapazität. Der Kapazitätswert wird vom Sensor 17 gemessen.

Die Sensorvorrichtung 18 ist unterhalb der Aufnahmevorrichtung 12 angeordnet oder in den unteren Bereich der Aufnahmevorrichtung 12 integriert. Die Aufnahmevorrichtung 12 kann beispielsweise aus Hartschaum bestehen oder Hartschaum umfassen.

Bei der Beurteilung des Beladungszustands der Aufnahmevorrichtung 12 mittels der Sensoren 17 ergibt sich die Schwierigkeit, dass physikalische Veränderungen in der Umgebung der Sensoren 17 einen beträchtlichen Einfluss auf die Sensordaten haben. Der Einfluss dieser physikalischen Veränderung auf die Messwerte ist ein komplexes, nichtlineares und offenes mathematisches Problem. Um dennoch eine zuverlässige Beurteilung des Beladungszustands zu erreichen, wird ein Machine Learning Modell darauf trainiert, aus den Sensordaten der Sensoren 17 sinnvolle Aussagen über den Beladungszustand zu erlangen.

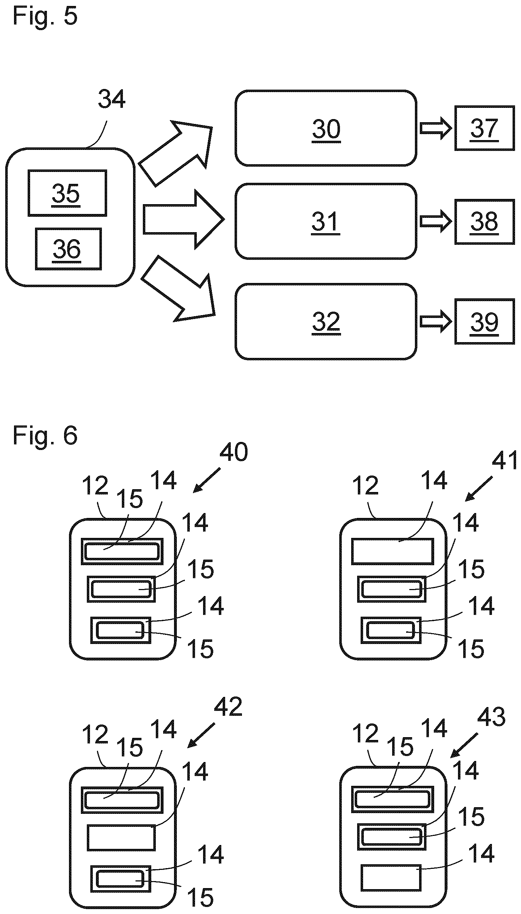

Fig. 5 zeigt schematisch vereinfacht drei verschiedene Machine Learning Modelle, 30, 31, 32 zur Beurteilung des Beladungszustands der Aufnahmevorrichtungen 12. Diese Machine Learning Modelle 30, 31, 32 sind darauf trainiert, aus den Eingangswerten 34 in Form der Sensordaten 35 jeweils binäre Ausgabewerte 37, 38, 39 zu errechnen. Es handelt sich bei den Machine Learning Modellen 30, 31, 32 somit um binäre Klassifikationsmodelle, die den Eingabewerten 34, eine Klasse "0" oder eine Klasse "1" zuordnen. Dies ist der Vorhersagewert, mit dem die Machine Learning Modelle 30, 31, 32 auf Grundlage der Sensordaten 35 eine Aussage über den Beladungszustand der Aufnahmevorrichtung 12 treffen. Beispielsweise wird mit dem Machine Learning Modell 30 die Aussage verifiziert, ob die Aufnahmevorrichtung vollständig gefüllt ist (Vorhersagewert "1") oder nicht (Vorhersagewert "0"). Mittels des Machine Learning Modells 31 wird beispielsweise die Aussage verifiziert, ob genau ein Werkergegenstand 15 fehlt oder nicht. Das Machine Learning Modell 32 verifiziert beispielsweise die Aussage, ob mehr als ein Werkergegenstand 15 fehlt oder nicht. Gemäß einer Ausführungsform ist für jede Aufnahme 14 ein separates Machine Learning Modell 31 vorgesehen, das angibt, ob diese Aufnahme 14 mit dem Werkergegenstand 15 gefüllt ist oder nicht.

Obwohl in Fig. 5 nur drei Machine Learning Modelle 30, 31, 32 dargestellt sind, können auch weniger oder deutlich mehr Machine Learning Modelle 30, 31, 32 zum Einsatz kommen. Beispielsweise können Machine Learning Modelle 30, 31, 32 vorgesehen sein, um zu überprüfen, ob ein in einer Aufnahme 14 eingelegter Werkergegenstand 15 einem Originalwerkergegenstand entspricht. Der Originalwerkergegenstand ist dabei derjenige Werkergegenstand 15, mit dem das Machine Learning Modell 30, 31, 32 trainiert wurde.

Aus den binären Ausgabewerten 37, 38, 39 können auch weitere Aussagen über den Beladungszustand der Aufnahmevorrichtung 12 ermittelt werden. Beispielsweise kann die Anzahl fehlender Werkergegenstände 15 festgestellt werden und welche Werkergegenstände 15 genau fehlen.

Die binären Ausgabewerte 37, 38, 39 haben insbesondere einen Wahrscheinlichkeitswert, der angibt, mit welcher Wahrscheinlichkeit die Aussagen zutreffen, die von den binären Ausgabewerten 37, 38, 39 repräsentiert werden. Durch Kombination der binären Ausgabewerte 37, 38, 39 kann eine Gesamtaussage über den Beladungszustand ermittelt werden, beispielsweise mittels vorgegebener Verknüpfungsregeln und/oder durch Zuführen der binären Ausgangswerte 37, 38, 39 zu einem weiteren Machine Learning Modell. Auch der Gesamtaussage wird eine Wahrscheinlichkeit zugeordnet, die sich aus den Wahrscheinlichkeitswerten ergibt. Die Gesamtaussage mit der größten Wahrscheinlichkeit wird als wahr angenommen und auf der Ausgabevorrichtung 21 angezeigt. Diese Gesamtaussage gibt beispielsweise an, welche Aufnahmen 14 leer sind und in welchen Aufnahmen 14 nicht die Originalwerkergegenstände eingelegt sind. Eine derartige Gesamtaussage über den Beladungszustand hilft der Bedienperson, die Aufnahmevorrichtung 12 korrekt zu befüllen sowie fehlende Werkergegenstände 15 herauszufinden und zu suchen.

Um die Genauigkeit der Vorhersage zu erhöhen, werden zudem Umgebungsbedingungen wie beispielsweise die Umgebungstemperatur, die Feuchtigkeit der Umgebungsluft und/oder der Luftdruck der Umgebungsluft berücksichtigt. Die Umgebungsbedingungen werden beispielsweise mit einem speziell dafür vorgesehenen Sensor oder einem als Referenzsensor dienenden Sensor 17 ermittelt. Gemäß einer Vorgehensweise wird ein Umgebungsbedingungswert 36 bereits während des Trainings der Machine Learning Modelle 30, 31, 32 gemessen, so dass Trainingsdatensätze bei unterschiedlichen Umgebungsbedingungen erstellt werden. Mittels dieser Trainingsdatensätze werden die Machine Learning Modelle 30, 31, 32 darauf trainiert, bei der Ermittlung des Beladungszustands auch den Umgebungsbedingungswert 36 zu berücksichtigen. Dieser wird den Machine Learning Modellen 30, 31, 32 zur Bestimmung des Beladungszustands als weiterer Eingabewert 34 zugeführt.

Gemäß einer anderen Methode wird die Abhängigkeit der Sensorwerte 35 von der oder den Umgebungsbedingungen durch ein mathematisches Modell beschrieben. Zur Erstellung dieses mathematischen Modells werden Sensordaten 35 bei sich verändernden Umgebungsbedingungen aufgenommen, um die Abhängigkeit zu ermitteln. Eine Analyse und mathematische Modellierung der Sensorwerte 35 in Abhängigkeit der Umgebungsbedingungen erlaubt das Erstellen eines mathematischen Modells, das diese Abhängigkeit beschreibt. Sowohl während des Trainings als auch während des späteren Einsatzes des Machine Learning Modells 30, 31, 32 werden die Sensordaten 35 mittels des mathematischen Modells normiert, bevor sie dem Machine Learning Modell 30, 32, 32 zugeführt werden. Auf diese Weise kann die Abhängigkeit der Sensordaten 34 von den Umgebungsbedingungen herausgerechnet werden.

Zum Training der Machine Learning Modelle 30, 31, 32 wird eine Reihe Trainingsdatensätze mit unterschiedlichen Beladungszuständen erzeugt. Fig. 6 zeigt für eine beispielhafte Aufnahmevorrichtung 12 vier unterschiedliche Beladungszustände 40, 41, 42, 43. In diesem Beispiel wird ein Trainingsdatensatz mit einem Beladungszustand 40 erzeugt, bei dem die Aufnahmevorrichtung 12 vollständig und korrekt beladen ist. Anschließend wird eine Anzahl Trainingsdatensätze erstellt, die der Anzahl der Aufnahmen 14 entsprechen. Jeder Trainingsdatensatz entspricht einem Beladungszustand 41, 42, 43, bei dem eine der Aufnahmen 14 nicht befüllt ist, die anderen Aufnahmen 14 jedoch befüllt sind. Schließlich werden noch eine Reihe weiterer, zufällig bestimmter Beladungszustände, die in Fig. 6 nicht gezeigt sind, gewählt und für diese Beladungszustände Trainingsdatensätze erzeugt. Mit diesen Trainingsdatensätzen werden die Machine Learning Modelle 30, 31, 32 trainiert.

Wird im Anschluss an das Training festgestellt, dass die Machine Learning Modelle 30, 31, 32 bei einigen Beladungszuständen keine akkuraten Vorhersagen liefern, werden die Machine Learning Modelle 30, 31, 32 für diese Beladungszustände nachtrainiert.

### Bezugszeichenliste

- 10: Werkergegenstandsaufbewahrungsvorrichtung
- 11: Behältnis
- 12: Aufnahmevorrichtung
- 13: Boden
- 14: Aufnahme
- 15: Werkergegenstand
- 17: Sensor
- 18: Sensorvorrichtung
- 21: Ausgabevorrichtung
- 22: Steuervorrichtung
- 23: Datenspeicher
- 24: Schnittstelle
- 25: externes Datenverarbeitungssystem
- 26: Öffnungszustandssensor
- 30, 31, 32: Machine Learning Modell
- 34: Eingabewerte
- 35: Sensordaten
- 36: Umgebungsbedingungswert
- 37, 38, 39: binärer Ausgabewert
- 40, 41, 42, 43: Beladungszustand

## Patentansprüche

1. Werkergegenstandsaufbewahrungsvorrichtung (10) umfassend wenigstens einen Sensor (17), eine Steuervorrichtung (22) und eine Aufnahmevorrichtung (12) mit Aufnahmen für Werkergegenstände (15), wobei die Aufnahmen (14) an die Form der Werkergegenstände (15) individuell angepasst sind, wobei der wenigstens eine Sensor (17) dazu eingerichtet ist, Sensordaten (35) zu erfassen, mittels denen die Präsenz und/oder Lage der Werkergegenstände (15) in den Aufnahmen (14) ermittelbar ist, und die Sensordaten (35) an die Steuervorrichtung (22) zu übermitteln, wobei die Steuervorrichtung (22) dazu eingerichtet ist, die Sensordaten (35) des Sensors (17) zu empfangen und als Eingabewerte (34) wenigstens einem Machine Learning Modell (30, 31, 32) zuzuführen, **dadurch gekennzeichnet, dass** das Machine Learning Modell (30, 31, 32) darauf trainiert ist, aus den Eingabewerten (34) wenigstens einen binären Ausgabewert (37, 38, 39) zu berechnen, wobei der binäre Ausgabewert (37, 38, 39) angibt, ob eine Aussage über einen Beladungszustand (40, 41, 42, 43) der Aufnahmevorrichtung (12) zutreffend ist, wobei die Steuervorrichtung (22) dazu eingerichtet ist, ein den binären Ausgabewert (37, 38, 39) umfassendes Signal zu erzeugen.

2. Werkergegenstandsaufbewahrungsvorrichtung (10) nach Anspruch 1, **dadurch gekennzeichnet, dass** die Steuervorrichtung (22) dazu eingerichtet, das Signal an wenigstens eine Schnittstelle (24) der Werkergegenstandsaufbewahrungsvorrichtung (10) zu übermitteln, wobei die Werkergegenstandsaufbewahrungsvorrichtung (10) insbesondere dazu eingerichtet ist, das Signal, insbesondere drahtlos oder drahtgebunden, von der Schnittstelle (24) an eine Ausgabevorrichtung (21) der Werkergegenstandsaufbewahrungsvorrichtung (10) und/oder ein externes Datenverarbeitungssystem zu übermitteln

3. Werkergegenstandsaufbewahrungsvorrichtung (10) nach Anspruch 1 oder 2, **dadurch gekennzeichnet, dass** der binäre Ausgabewert (37, 38, 39) angibt, ob sämtliche Aufnahmen (14) mit Werkergegenständen (15) gefüllt sind und/oder ob genau eine Aufnahme (14) keinen Werkergegenstand (15) enthält und/oder ob mehr als eine Aufnahme (14) keinen Werkergegenstand (15) enthält.

4. Werkergegenstandsaufbewahrungsvorrichtung (10) nach einem der Ansprüche 1 bis 3, **dadurch gekennzeichnet, dass** die Sensordaten (35) mehreren Machine Learning Modellen (30, 31, 32) zugeführt werden, die binäre Ausgabewerte (37, 38, 39) zu unterschiedlichen Aussagen über den Beladungszustand (40, 41, 42, 43) berechnen.

5. Werkergegenstandsaufbewahrungsvorrichtung (10) nach Anspruch 4, **dadurch gekennzeichnet, dass** die Steuervorrichtung (22) dazu eingerichtet ist, aus den binären Ausgabewerten (37, 38, 39), die von den mehreren Machine Learning Modellen (30, 31, 32) berechnet wurden, eine Gesamtaussage über den Beladungszustand (40, 41, 42, 43) zu ermitteln, wobei die Ermittlung der Gesamtaussage durch Verknüpfung der binären Ausgabewerte (37, 38, 39) mittels vorgegebener Verknüpfungsregeln und/oder durch Zuführen der binären Ausgabewerte (37, 38, 39) zu einem weiteren Machine Learning Modell (30, 31, 32) erfolgt.

6. Werkergegenstandsaufbewahrungsvorrichtung (10) nach einem der Ansprüche 1 bis 5, **dadurch gekennzeichnet, dass** für jede Aufnahme (14) ein zugeordnetes Machine Learning Modell (30, 31, 32) auf der Speichervorrichtung (22) gespeichert ist, wobei die zugeordneten Machine Learning Modelle (30, 31, 32) darauf trainiert sind, aus den Sensordaten (35) individuelle binäre Ausgabewerte (37, 38, 39) zu berechnen, die jeweils angeben, ob sich der an die zugeordnete Aufnahme (14) individuell angepasste Werkergegenstand (15) in der zugeordneten Aufnahme (14) befindet.

7. Werkergegenstandsaufbewahrungsvorrichtung (10) nach Anspruch 6, **dadurch gekennzeichnet, dass** die Steuervorrichtung (22) dazu eingerichtet ist, aus den individuellen binären Ausgabewerten (37, 38, 39) zu bestimmen, wie viele Aufnahmen (14) keinen Werkergegenstand (15) enthalten und/oder welche Aufnahmen (14) keinen Werkergegenstand (15) enthalten.

8. Werkergegenstandsaufbewahrungsvorrichtung (10) nach einem der Ansprüche 1 bis 7 die dazu eingerichtet ist, einen Umgebungsbedingungswert (36) zu erfassen und an die Steuervorrichtung (22) zu übermitteln, wobei die Steuervorrichtung (22) dazu eingerichtet ist, den Umgebungsbedingungswert (36) als Eingabewert (34) dem wenigstens einen Machine Learning Modell (30, 31, 32) zuzuführen, wobei das Machine Learning Modell (30, 31, 32) darauf trainiert ist, bei der Ermittlung des wenigstens einen binären Ausgabewerts (37, 38, 39) den Umgebungsbedingungswert (36) zu berücksichtigen.

9. Werkergegenstandsaufbewahrungsvorrichtung (10) nach einem der Ansprüche 1 bis 8 die dazu eingerichtet ist, einen Umgebungsbedingungswert (36), insbesondere eine Umgebungstemperatur oder einen Messwert eines Referenzsensors, zu erfassen und an die Steuervorrichtung (22) zu übermitteln, wobei die Steuervorrichtung (22) dazu eingerichtet ist, mittels eines mathematischen Modells den Einfluss der Umgebungsbedingung auf die Sensorwerte (35) zu beurteilen und die Sensorwerte (35) anhand des Umgebungsbedingungswerts (36) zu normieren, bevor die Sensorwerte (35) dem wenigstens einen Machine Learning Modell (30, 31, 32) zugeführt werden.

10. Verfahren zur Beurteilung des Beladungszustands (40, 41, 42, 43) einer Aufnahmevorrichtung (12) mit Aufnahmen (14) für Werkergegenstände (15), wobei die Aufnahmen (14) an die Form der Werkergegenstände (15) individuell angepasst sind, wobei wenigstens ein Sensor (17) Sensordaten (35) erfasst, mittels denen die Präsenz und/oder Lage der Werkergegenstände (15) in den Aufnahmen (14) ermittelbar ist, und die Sensordaten (35) an eine Steuervorrichtung (22) übermittelt, wobei die Steuervorrichtung (22) die Sensordaten (35) des Sensors (17) empfängt und als Eingabewerte (34) wenigstens einem Machine Learning Modell (30, 31, 32) zuführt, **dadurch gekennzeichnet, dass** das Machine Learning Modell (30, 31, 32) aus den Eingabewerten (34) wenigstens einen binären Ausgabewert (37, 38, 39) berechnet, wobei der binäre Ausgabewert (37, 38, 39) angibt, ob eine Aussage über einen Beladungszustand (40, 41, 42, 43) der Aufnahmen (14) zutreffend ist, wobei die Steuervorrichtung (22) ein den binären Ausgabewert (37, 38, 39) umfassendes Signal erzeugt.

11. Verfahren zum Erstellen eines Machine Learning Modells (30, 31, 32) zur Beurteilung des Beladungszustands (40, 41, 42, 43) einer Aufnahmevorrichtung (12) mit individuell an die Form von Werkergegenständen (15) angepassten Aufnahmen (14), wobei eine Anzahl verschiedener Trainingsdatensätze erstellt wird, wobei jeder Trainingsdatensatz Sensordaten (35) enthält, die mittels wenigstens eines Sensors (17) bei festgelegten Beladungszuständen (40, 41, 42, 43) erfasst wurden, wobei sich die Beladungszustände (40, 41, 42, 43), bei denen die einzelnen Trainingsdatensätze aufgenommen wurden, voneinander unterscheiden, wobei die Sensordaten (35) dem Machine Learning Modell (30, 31, 32) als Eingangswerte (34) für ein Training des Machine Learning Modells (30, 31, 32) zugeführt werden, wobei dem Machine Learning Modell (30, 31, 32) zum Training für jeden der verschiedenen Beladungszustände (40, 41, 42, 43) wenigstens ein binärer Ausgabewert (37, 38, 39) vorgegeben wird, wobei der binäre Ausgabewert (37, 38, 39) angibt, ob eine Aussage über den Beladungszustand (40, 41, 42, 43) zutreffend ist.

12. Verfahren nach Anspruch 11, **dadurch gekennzeichnet, dass** die verschiedenen Beladungszustände (40, 41, 42, 43) einen Beladungszustand (40, 41, 42, 43) mit vollständig gefüllter Aufnahmevorrichtung (12) und für jede Aufnahme (14) einen Beladungszustand (40, 41, 42, 43), bei dem ausschließlich diese Aufnahme (14) leer ist, umfassen, wobei insbesondere die Anzahl von Trainingsdatensätzen wenigstens der doppelten Anzahl an Aufnahmen (14) in der Aufnahmevorrichtung (12) entspricht.

13. Verfahren nach Anspruch 11 oder 12, **dadurch gekennzeichnet, dass** für wenigstens einen Beladungszustand (40, 41, 42, 43), insbesondere mehrere Beladungszustände (40, 41, 42, 43), Trainingsdatensätze bei unterschiedlichen Umgebungsbedingungen, insbesondere Umgebungstemperaturen, erfasst werden und ein Umgebungsbedingungswert (36) der Umgebungsbedingung dem Machine Learning Modell (30, 31, 32) im Training als Eingabewert (35) vorgegeben wird, um die Abhängigkeit der Sensordaten von den Umgebungstemperaturen im Machine Learning Modell (30, 31, 32) zu berücksichtigen.

14. Verfahren nach einem der Ansprüche 11 bis 13, **dadurch gekennzeichnet, dass** die Abhängigkeit der Sensordaten (35) von wenigstens einer Umgebungsbedingung, insbesondere der Umgebungstemperatur, durch ein mathematisches Modell beschrieben wird, wobei das mathematische Modell durch Erfassen von Sensordaten (35) bei unterschiedlichen Umgebungsbedingungen, und insbesondere auch für verschiedene Beladungszustände, und Analyse der erfassten Sensordaten (35) in Abhängigkeit der Umgebungsbedingung ermittelt wird, wobei insbesondere die Sensordaten (35) mittels des mathematischen Modells normiert werden, bevor sie dem Machine Learning Modell (30, 31, 32) als Eingangswerte (34) für ein Training des Machine Learning Modells (30, 31, 32) zugeführt werden.

15. Verfahren nach einem der Ansprüche 11 bis 14, wobei während des Betriebs der Aufnahmevorrichtung (12) aufgenommene Sensordaten (35) genutzt werden, um das Machine Learning Modell (30, 31, 32) nachzutrainieren.

## Claims

1. A workpiece storage device (10) including at least one sensor (17), a control device (22) and a pick-up device (12) with receptacles (14) for workpieces (15), wherein the receptacles (14) are individually adapted to the shape of the workpieces (15), wherein the at least one sensor (17) is configured, to acquire sensor data (35), by means of which the presence and/or location of the workpieces (15) in the receptacles (14) is determinable, and to transmit the sensor data (35) to the control device (22), wherein the control device (22) is configured, to receive the sensor data (35) of the sensor (17) and to feed them as input values (34) to at least one machine learning model (30, 31, 32), **characterised in that** the machine learning model (30, 31, 32) is trained, to calculate at least one binary output value (37, 38, 39) from the input values (34), wherein the binary output value (37, 38, 39) indicates, whether a statement about a loading state (40, 41, 42, 43) of the pick-up device (12) is applicable, wherein the control device (22) is configured, to generate a signal including the binary output value (37, 38, 39).

2. The workpiece storage device (10) according to claim 1, **characterized in that** the control device (22) is configured, to transmit the signal to at least one interface (24) of the workpiece storage device (10), wherein the workpiece storage device (10), in particular, is configured, to transmit the signal, in particular wirelessly or by wire, from the interface (24) to an output device (21) of the workpiece storage device (10) and/or an external data processing system.

3. The workpiece storage device (10) according to claim 1 or 2, **characterized in that** the binary output value (37, 38, 39) indicates, whether all of the receptacles (14) are filled with workpieces (15) and/or whether exactly one receptacle (14) does not contain a workpiece (15) and/or whether more than one receptacle (14) does not contain a workpiece (15).

4. The workpiece storage device (10) according to any one of claims 1 to 3, **characterized in that** the sensor data (35) are fed to several machine learning models (30, 31, 32) that calculate binary output values (37, 38, 39) for different statements about the loading state (40, 41, 42, 43).

5. The workpiece storage device (10) according to claim 4, **characterized in that** the control device (22) is configured, to determine an overall statement about the loading state (40, 41, 42, 43) from the binary output values (37, 38, 39), which have been calculated by said several machine learning models (30, 31, 32), wherein the determination of the overall statement takes place by linking the binary output values (37, 38, 39) by means of predetermined linking rules and/or by feeding the binary output values (37, 38, 39) to a further machine learning model.

6. The workpiece storage device (10) according to any one of claims 1 to 5, **characterized in that** an assigned machine learning model (30, 31, 32) is stored on the memory device for each receptacle (14), the assigned machine learning models (303, 31, 32) being trained to calculate individual binary output values (37, 38, 39) from the sensor data (35), indicating respectively, whether the workpiece (15) individually adapted to the assigned receptacle (14) is located in the assigned receptacle (14).

7. The workpiece storage device (10) according to claim 6, **characterized in that** the control device (22) is configured, to specify from the individual binary output values (37, 38, 39), how many receptacles (14) do not contain a workpiece (15) and/or which receptacles (14) do not contain a workpiece (15).

8. The workpiece storage device (10) according to any one of claims 1 to 7, which is configured, to acquire and transmit to the control device (22) an ambient condition value (36), wherein the control device (22) is configured, to feed the ambient condition value (36) as input value (34) to the at least one machine learning model (30, 31, 32), wherein the machine learning model (30, 31, 32) is trained to take into account the ambient condition value (36) during the determination of the at least one binary output value (37, 38, 39).

9. The workpiece storage device (10) according to any one of claims 1 to 8, which is configured, to acquire and transmit to the control device (22) an ambient condition value (36), in particular an ambient temperature or a measured value of a reference sensor, wherein the control device (22) is configured, to assess the effect of the ambient condition on the sensor values (35) by means of a mathematical model and to normalize the sensor values (35) with the help of the ambient condition value (36) before the sensor values (359 are fed to the at least one machine learning model (30, 31, 32).

10. A method for assessing the loading state (40, 41, 42, 43) of a pick-up device (12) with receptacles (14) for workpieces (15), wherein the receptacles (14) are individually adapted to the shape of the workpieces (15), wherein at least one sensor (17) acquires sensor data (35), by means of which the presence and/or location of the workpieces (15) in the receptacles (14) is determinable, and transmits the sensor data (35) to a control device (22), wherein the control device (22) receives the sensor data (35) of the sensor (17) and feeds them as input values (34) to at least one machine learning model (30, 31, 32), **characterised in that** the machine learning model (30, 31, 32) calculates at least one binary output value (37, 38, 39) from the input values (34), wherein the binary output value (37, 38, 39) indicates, whether a statement about a loading state (40, 41, 42, 43) of the receptacles (14) is applicable, wherein the control device (22) generates a signal including the binary output value (37, 38, 39).

11. A method for creating a machine learning model (30, 31, 32) for assessing the loading state (40, 41, 42, 43) of a pick-up device (12) with receptacles (14) individually adapted to the shape of workpieces (15), wherein a number of different training data sets is created, wherein each training data set contains sensor data (35), which have been acquired by means of at least one sensor (17) for defined loading states (40, 41, 42, 43), wherein the loading states (40, 41, 42, 43) for which the individual training data sets have been recorded, differ from each other, wherein the sensor data (35) are fed to the machine learning model (30, 31, 32) as input values (34) for a training of the machine learning model (30, 31, 32), wherein for training at least one binary output value (37, 38, 39) for each of the different loading states (40, 41, 42, 43) is predetermined to the machine learning model (30, 31, 32), wherein the binary output value (37, 38, 39) indicates, whether a statement about the loading state (40, 41, 42, 43) is applicable.

12. The method according to claim 11, **characterized in that** the different loading states (40, 41, 42, 43) include a loading state (40, 41, 42, 43) with completely filled pick-up device, and for each receptacle (14) a loading state (40, 41, 42, 43), for which exclusively this receptacle (14) is empty, wherein, in particular, the number of training data sets corresponds to at least twice the number of receptacles (14) in the pick-up device (12).

13. The method according to claim 11 or 12, **characterized in that** for at least one loading state (40, 41, 42, 43), in particular several loading states (40, 41, 42, 43), training data sets are acquired under different ambient conditions, in particular ambient temperatures, and an ambient condition value (36) of the ambient condition is predetermined as an input value (34) to the machine learning model (30, 31, 32) in training, in order to take into account the dependency of the sensor data (35) on the ambient temperatures in the machine learning model (30, 31, 32).

14. The method according to any one of the claims 11 to 13, **characterized in that** the dependency of the sensor data (35) on at least one ambient condition, in particular the ambient temperature, is described by a mathematical model, wherein the mathematical model is determined by acquiring sensor data (35) at different ambient conditions, and in particular also for different loading states, and analysis of the acquired sensor data (35) as a function of the ambient condition, wherein, in particular, the sensor data (35) are normalized by means of the mathematical model before they are fed to the machine learning model (30, 31, 32) as input values (34) for a training of the machine learning model (30, 31, 32).

15. The method according to any one of claims 11 to 14, wherein sensor data (35) recorded during operation of the pick-up device (12) are used, in order to post-train the machine learning model (30, 31, 32).

## Revendications

1. Dispositif (10) de rangement d'objets de travail comprenant au moins un capteur (17), un dispositif de commande (22) et un dispositif de réception (12) avec des réceptacles pour des objets de travail (15), les réceptacles (14) étant adaptés individuellement à la forme des objets de travail (15), ledit au moins un capteur (17) étant conçu pour enregistrer des données de capteur (35) au moyen desquelles la présence et/ou la position des objets de travail (15) dans les réceptacles (14) sont aptes à être déterminées, et pour transmettre les données de capteur (35) au dispositif de commande (22), le dispositif de commande (22) étant conçu de façon à recevoir les données de capteur (35) du capteur (17) et les envoyer en tant que valeurs d'entrée (34) à au moins un modèle d'apprentissage automatique (30, 31, 32), **caractérisé en ce que** le modèle d'apprentissage automatique (30, 31, 32) est entraîné à calculer au moins une valeur de sortie binaire (37, 38, 39) à partir des valeurs d'entrée (34), la valeur de sortie binaire (37, 38, 39) indiquant si une déclaration concernant un état de chargement (40, 41, 42, 43) du dispositif de réception (12) est correcte, le dispositif de commande (22) étant conçu de façon à générer un signal comprenant la valeur de sortie binaire (37, 38, 39).

2. Dispositif (10) de rangement d'objets de travail selon la revendication 1, **caractérisé en ce que** le dispositif de commande (22) est conçu de façon à transmettre le signal à au moins une interface (24) du dispositif (10) de rangement d'objets de travail, le dispositif (10) de rangement d'objets de travail étant notamment conçu de façon à transmettre le signal, notamment sans fil ou par fil, de l'interface (24) à un dispositif de sortie (21) du dispositif (10) de rangement d'objets de travail et/ou à un système de traitement de données externe.

3. Dispositif de stockage d'objets de travail (10) selon la revendication 1 ou la revendication 2, **caractérisé en ce que** la valeur de sortie binaire (37, 38, 39) indique si tous les réceptacles (14) sont remplis d'objets de travail (15) et/ou si exactement un réceptacle (14) ne contient aucun objet de travail (15) et/ou si plus d'un réceptacle (14) ne contient aucun objet de travail (15).

4. Dispositif de rangement d'objets de travail (10) selon l'une des revendications 1 à 3, **caractérisé en ce que** les données de capteur (35) sont fournies à plusieurs modèles d'apprentissage automatique (30, 31, 32) qui calculent des valeurs de sortie binaires (37, 38, 39) pour différentes déclarations sur l'état de chargement (40, 41, 42, 43).

5. Dispositif de rangement d'objets de travail (10) selon la revendication 4, **caractérisé en ce que** le dispositif de commande (22) est conçu de façon à calculer, à partir des valeurs de sortie binaires (37, 38, 39) calculées par la pluralité de modèles d'apprentissage automatique (30, 31, 32), une déclaration globale concernant l'état de chargement (40, 41, 42, 43), la détermination de la déclaration globale s'effectuant par combinaison des valeurs de sortie binaires (37, 38, 39) au moyen de règles de combinaison prédéfinies et/ou par apport des valeurs de sortie binaires (37, 38, 39) à un autre modèle d'apprentissage automatique (30, 31, 32).

6. Dispositif de rangement d'objets de travail (10) selon l'une des revendications 1 à 5, **caractérisé en ce que**, pour chaque réceptacle (14), un modèle d'apprentissage automatique associé (30, 31, 32) est stocké sur le dispositif de stockage (22), les modèles d'apprentissage automatique associés (30, 31, 32) étant entraînés à calculer, à partir des données de capteur (35), des valeurs de sortie binaires individuelles (37, 38, 39) qui indiquent chacune si l'objet de travail (15) adapté individuellement au réceptacle (14) attribué se trouve dans le réceptacle (14) attribué.

7. Dispositif de rangement d'objets de travail (10) selon la revendication 6, **caractérisé en ce que** le dispositif de commande (22) est conçu de façon à déterminer, à partir des valeurs de sortie binaires individuelles (37, 38, 39), combien de réceptacles (14) ne contiennent pas d'objets de travail (15) et/ou quels réceptacles (14) ne contiennent pas d'objets de travail (15).

8. Dispositif de stockage d'objets de travail (10) selon l'une des revendications 1 à 7, qui est conçu de façon à déterminer une valeur de condition d'environnement (36) et la transmettre au dispositif de commande (22), le dispositif de commande (22) étant conçu de façon à fournir la valeur de condition d'environnement (36) en tant que valeur d'entrée (34) audit au moins un modèle d'apprentissage automatique (30, 31, 32), le modèle d'apprentissage automatique (30, 31, 32) étant entraîné à prendre en compte la valeur de condition d'environnement (36) lors de la détermination de ladite au moins une valeur de sortie binaire (37, 38, 39).

9. Dispositif de rangement d'objets de travail (10) selon l'une des revendications 1 à 8, qui est conçu de façon à détecter une valeur de condition d'environnement (36), en particulier une température ambiante ou une valeur de mesure d'un capteur de référence, et pour la transmettre au dispositif de commande (22), le dispositif de commande (22) étant conçu de façon à évaluer, au moyen d'un modèle mathématique, l'influence de la condition d'environnement sur les valeurs de capteur (35) et à normaliser les valeurs de capteur (35) en utilisant la valeur de condition d'environnement (36), avant que les valeurs de capteur (35) ne soient transmises audit au moins un modèle d'apprentissage automatique (30, 31, 32).

10. Procédé d'évaluation de l'état de chargement (40, 41, 42, 43) d'un dispositif de réception (12) ayant des réceptacles (14) pour des objets de travail (15), les réceptacles (14) étant adaptés individuellement à la forme des objets de travail (15), au moins un capteur (17) enregistrant des données de capteur (35) au moyen desquelles la présence et/ou la position des objets de travail (15) dans les réceptacles (14) sont aptes à être déterminées, et transmettant les données de capteur (35) à un dispositif de commande (22), le dispositif de commande (22) recevant les données de capteur (35) du capteur (17) et les envoyant en tant que valeurs d'entrée (34) à au moins un modèle d'apprentissage automatique (30, 31, 32), **caractérisé en ce que** le modèle d'apprentissage automatique (30, 31, 32) calcule au moins une valeur de sortie binaire (37, 38, 39) à partir des valeurs d'entrée (34), la valeur de sortie binaire (37, 38, 39) indiquant si une déclaration concernant un état de chargement (40, 41, 42, 43) des réceptacles (14) est correcte, le dispositif de commande (22) générant un signal qui comprend la valeur de sortie binaire (37, 38, 39).

11. Procédé de création d'un modèle d'apprentissage automatique (30, 31, 32) pour évaluer l'état de chargement (40, 41, 42, 43) d'un dispositif de réception (12) avec des réceptacles (14) adaptés individuellement à la forme d'objets de travail (15), un certain nombre d'ensembles de données d'entraînement différents étant créés, chaque ensemble de données d'entraînement contenant des données de capteur (35) qui ont été enregistrées au moyen d'au moins un capteur (17) pour des états de chargement (40, 41, 42, 43) déterminés, les états de chargement (40, 41, 42, 43), dans lesquels les différents ensembles de données d'entraînement ont été enregistrés, étant différents les uns des autres, les données de capteur (35) étant amenées au modèle d'apprentissage automatique (30, 31, 32) en tant que valeurs d'entrée (34) pour un apprentissage du modèle d'apprentissage automatique (30, 31, 32), au moins une valeur de sortie binaire (37, 38, 39) étant prédéfinie pour l'apprentissage du modèle d'apprentissage automatique (30, 31, 32) pour chacun des différents états de chargement (40, 41, 42, 43), la valeur de sortie binaire (37, 38, 39) indiquant si une déclaration concernant l'état de chargement (40, 41, 42, 43) est correcte.

12. Procédé selon la revendication 11, **caractérisé en ce que** les différents états de chargement (40, 41, 42, 43) comprennent un état de chargement (40, 41, 42, 43) avec un dispositif de réception (12) entièrement rempli et, pour chaque réceptacle (14), un état de chargement (40, 41, 42, 43) selon lequel seul ce réceptacle (14) est vide, le nombre d'ensembles de données d'apprentissage correspondant notamment à au moins deux fois le nombre de réceptacles (14) dans le dispositif de réception (12).

13. Procédé selon la revendication 11 ou la revendication 12, **caractérisé en ce que** pour au moins un état de chargement (40, 41, 42, 43), notamment plusieurs états de chargement (40, 41, 42, 43), des ensembles de données d'entraînement sont enregistrés dans différentes conditions d'environnement, en particulier des températures ambiantes, et une valeur de condition d'environnement (36) de la condition d'environnement est donnée au modèle d'apprentissage automatique (30, 31, 32) en tant que valeur d'entrée (35) pendant l'apprentissage, afin de tenir compte de la dépendance des données de capteur par rapport aux températures ambiantes dans le modèle d'apprentissage automatique (30, 31, 32).

14. Procédé selon l'une des revendications 11 à 13, **caractérisé en ce que** la dépendance des données de capteur (35) vis-à-vis d'au moins une condition d'environnement, en particulier de la température ambiante, est décrite par un modèle mathématique, le modèle mathématique étant déterminé par la détection de données de capteur (35) pour différentes conditions d'environnement, et notamment également pour différents états de charge, et par l'analyse des données de capteur (35) saisies en fonction de la condition d'environnement, les données de capteur (35) étant notamment normalisées au moyen du modèle mathématique avant d'être amenées au modèle d'apprentissage automatique (30, 31, 32) en tant que valeurs d'entrée (34) pour un entraînement du modèle d'apprentissage automatique (30, 31, 32).

15. Procédé selon l'une des revendications 11 à 14, dans lequel des données de capteur (35) enregistrées pendant le fonctionnement du dispositif d'enregistrement (12) sont utilisées pour réentraîner le modèle d'apprentissage automatique (30, 31, 32).
